# EUROPEAN PATENT SPECIFICATION

(11) **EP 4 148 093 B1**
(45) Date of publication and mention of the grant of the patent: **01.04.2026**
(21) Application number: 21769155.9
(22) Date of filing: 20.07.2021
(51) Int. Cl.: C09D 11/10, C09D 11/102, C09D 11/106, C09D 11/38

(54) **HEAT-CURABLE AQUEOUS DYES FOR INKJET PRINTING**
WÄRMEHÄRTBARE WÄSSRIGE FARBSTOFFE FÜR TINTENSTRAHLDRUCK
ENCRES AQUEUSES POUR IMPRESSION PAR JET D'ENCRE THERMIQUEMENT DURCISSABLES

(30) Priority: 21.07.2020 US 202063054266 P
(43) Date of publication of application: 15.03.2023
(73) Proprietor: Sun Chemical Corporation, Parsippany, NJ 07054-1285 (US)
(72) Inventor: ILLSLEY, Derek, Somerset BA3 4RT (GB); DANIEL, Christopher, Somerset BA3 4RT (GB); ENRIQUE, Igor, 48500 Gallarta, Vizcaya (ES)
(74) Representative: Carpmaels & Ransford LLP
(86) International application number: PCT/ES2021/070541
(87) International publication number: WO 2022/018316

(56) References cited:
- WO-A1-2019/079149
- CA-A1- 2 107 980
- JP-A- 2019 172 753
- US-A- 5 958 561
- US-A1- 2005 252 418

## Description

The present invention relates to thermally curable aqueous inkjet compositions comprising a first acid-functional resin and a second hydroxyl-functional component, which are preferably used in inkjet printing, and are suitable for a number of applications where a thermal curing process is used, such as textiles printing, the printing of metal decoration (e.g. can printing), automotive coatings, décor and the like.

### BACKGROUND OF THE INVENTION

The preparation of resistant prints via the thermal curing of a first acid-functional resin and a second hydroxyl-functional component according to the present invention is not known in the art. Advantageously, the printing inks of the current invention have excellent stability, showing very little change in viscosity over a period of several weeks when stored at 50°C. This is an especially advantageous feature for inkjet printing where any changes in viscosity can be detrimental to the printing (jetting) quality. A further benefit of this stable chemistry is that when the inks partially or fully dry at temperatures used in printing (typically up to 40°C), no crosslinking occurs, meaning that the inks can be re-dissolved quite readily, reducing the risk of irreversibly blocking printheads.

A number of conventional crosslinking chemistries such as keto-hydrazide, keto-amine, acid-carbodiimide, acid-oxazoline, acid-aziridine can start to crosslink at room temperature once the ink/coating has dried, which would be highly undesirable for an inkjet printing process, since it reduces resolubility of the ink which can lead to irreversible blocking of printheads. The use of amino resins, such as melamine-formaldehydes and urea-formaldehydes, and blocked isocyanates (which typically have a molecular weight of less than 1000 Daltons) in thermal curing have also been reported and they can be designed to have acceptable stability at temperatures below 40°C. However, there can be associated health and safety concerns with the use of such crosslinkers and they are also more effective in crosslinking hydroxyl-functional resins than the acid-functional resins of the first component of the current invention.

Polyurethane dispersions (PUDs) are one of the predominant resin chemistries used in the preparation of pigmented aqueous inkjet printing inks. There are a number of instances in the prior art of the use of amino resins, such as melamine-formaldehydes, to crosslink aqueous inkjet printing inks containing PUDs, especially in the printing of textiles. WO2009/137753 describes how PUDs can be crosslinked with Cymel 303, a melamine-formaldehyde crosslinker, at a temperature of 160°C. A number of other patents describe the use of optional crosslinkers in combination with PUDs to enable improved resistance properties, including; WO2019074683, US20190106587, US10513622, JP2002294112. US9249324, which discloses polyurethane pigment dispersants, describes the crosslinking possibilities for polyurethanes having any of carboxylic acid, hydroxyl or amine pendant functional groups. Crosslinkers include carbodiimides, epoxies, isocyanates, amino resins (e.g. melamine-formaldehyde), aziridines.

US20170029639 and US20170218565 describe the preparation of encapsulated resin particles, where the capsules may comprise compositions which are thermally curable. Again, various conventional crosslinking chemistries are disclosed including; ketone-hydrazine, epoxy-amine, melamine-formaldehyde, with a preference for the use of blocked isocyanates. Blocked isocyanates have the advantage that specific deblocking temperatures can be achieved through the selection of the blocking agent.

WO201702178 describes composite resin particles comprising low molecular weight conventional crosslinkers, such as epoxies, oxetanes, aziridines, amino resins (such as melamine-formaldehydes) and blocked isocyanates, where the molecular weight of the crosslinker is preferably less than 2000 Daltons.

WO2020102788 discloses aqueous inkjet printing inks comprising carboxylic acid functional acrylic resins which may be crosslinked with well-known, conventional, crosslinkers such as polycarbodiimides, polyoxazolines, aziridines, melamine-formaldehydes, ammonium zirconium carbonate. There is no mention of thermal crosslinking of acid functional resins with a hydroxyl-functional second component, especially where that second component is a resin dispersion or resin solution. As described previously, the issue with such conventional crosslinkers is that they can start to crosslink at ambient temperatures (or temperatures below 40°C) which could be highly undesirable for an aqueous inkjet printing ink.

Aqueous inkjet compositions comprising (meth)acrylic copolymer dispersions are also well known. US7338988, US7638561, US7354476 describe aqueous inkjet compositions comprising acrylic dispersions having T_{g}s (glass transition temperature) in the range -40 to 150°C. US7338988 and JP2015093954 describe the use of core-shell acrylic dispersions. The combination of discrete (i.e. separate) acrylic dispersions and polyurethane dispersions is not revealed, nor the potential for the use of hydroxyl-functional PUDs in the thermal curing of such acrylic dispersions.

Recently, the use of acrylated polyurethane dispersions ('Ac-PUDs') in the preparation of UV, and EB-curable aqueous inkjet printing compositions has been disclosed quite widely, for example in US10076909, EP3390545, WO201717498 and WO2018138525. The crosslinking of these Ac-PUDs is induced by the use of a suitable photoinitiator in the case of UV-curing. In principle, such compositions will have excellent stability since crosslinking can only be affected in the presence of intense UV light or EB radiation once the ink composition has been partially or fully dried after printing, thereby overcoming some of the deficiencies of conventional crosslinkers, as alluded to before. However, the use of photoinitiators can pose a risk of unwanted migration of low molecular weight compounds from a cured ink, which would be undesirable in many applications, including the printing of textiles or metal can decoration for food packaging. Furthermore, Ac-PUDs can be prone to hydrolysis of the acrylate groups, resulting in the liberation of acrylic acid causing potential pH instability issues, again undesirable for inkjet printing.

The prior art also does not disclose the use of organically modified colloidal silicas, such as the Bindzil CC range (Akzo Nobel), in the preparation of aqueous inkjet inks, let alone the thermal crosslinking of aqueous inkjet inks. These organically modified colloidal silicas have hydroxyl groups pendant on the organic moieties which are present on the surface of the silica particles which may be available for thermal crosslinking with the acid groups of the resin compound of the first component of the invention.

According to the present invention there is provided thermally curable aqueous inkjet printing ink compositions comprising an acid-functional resin and as a second component a hydroxyl-functional material such as a resin or a hydroxyl-functional colloidal silica (preferably a hydroxyl-functional organically modified colloidal silica). Although the use of water-soluble and water-dispersible acrylic copolymers in the preparation of inkjet printing inks has been reported, where the crosslinking of these resins has been reported this has invariably been achieved through the use of conventional crosslinkers as well known in the art. The limitations of these crosslinkers have already been described in detail previously.

The use of organically modified colloidal silicas of the type described in the invention are advantageous as they not only enable the thermal curing aspect of the invention, they also enable the preparation of aqueous inkjet printing inks having superior stability, compared with conventional colloidal silicas. The inventors have found that when conventional anionic colloidal silicas are used then the stability of wet inks, with respect to viscosity changes, especially when the inks are stored at 40°C, or higher, can be unsatisfactory. The organically modified colloidal silicas used in the invention enable the preparation of stable inks.

WO 2019/079149 A1 relates to ink compositions suitable for applications in the printing industry, for example continuous inkjet printing, including ultra-high speed continuous inkjet printing. The ink compositions use volatile organic solvents, a colorant, and one or more binder resins including a resin that is a phenolic resole resin, wherein the ink composition is free of methanol, halogens, halogenated compounds and bisphenol-A.

US 2005/252418 A1 relates to both a pigment dispersing resin which is a copolymer of (A) polymerizable unsaturated monomer containing at least one kind of ionic functional group selected from the group consisting of tertiary amino group, quaternary ammonium salt and sulfonic acid group; (B) nonionic polymerizable unsaturated monomer having polyoxyalkylene chain; (C) ultraviolet-absorbing polymerizable unsaturated monomer and/or an ultraviolet-stabilizing polymerizable unsaturated monomer; and (D) other ethylenically unsaturated monomer, and water-based pigment dispersion which comprises said pigment dispersing resin, pigment, aqueous medium and, as circumstances may demand, dispersing agent as well.

CA 2,107,980 A1 relates to an aqueous based ink composition that contains polymers which can be crosslinked by the application of heat such that the cross-linked resultant deposit is used to produce a cohesive matrix that is resistant to an acidic fountain solution of an offset printing process. The cross-linked composition includes a first polymer containing a cyclic anhydride or derivative thereof and a second polymer that contains hydroxyl functionality.

US 5,958,561 A relates to a durable image formed by the combination of an aqueous ink comprising an aqueous vehicle and a colorant; and a textile, wherein said textile has been treated with a hydrophilic composition containing at least one crosslinkable thermoplastic polymer, said crosslinkable polymer having a number average molecular weight of at least 6,000 and being selected from the group consisting of polymers having at least one carboxylic acid group and at least one crosslinkable group; and a mixture of at least two polymers wherein at least one has a carboxylic acid group and at least one other has a crosslinkable group.

JP 2019 172753 A relates to a composite resin aqueous dispersion, comprising a polyurethane resin (A) and an acrylic polymer (B) dispersed in an aqueous medium and in which the polyurethane resin (A) has (a1) a structure derived from polyisocyanate, (a2) a structure derived from a polyol not containing an acidic group, (a3) a structure derived from an acidic group-containing polyol, and (a4) a structure derived from a hydroxyl group-containing polyamine.

WO 2018/071858 A1 relates to aqueous inkjet ink compositions, comprising: a water-dispersible polyurethane polymer having a backbone with pendant hydroxyl groups and, optionally, pendant neutralized carboxyl groups; a colorant; a fluid carrier; and optionally, a crosslinker.

WO 2022/079414 A1 relates to curable aqueous printing ink compositions, especially inkjet, having excellent resolubility, comprising self-crosslinkable styrene-acrylic polymer dispersions and hydroxy-functional PUDs.

Citation or identification of any document in this application is not an admission that such represents prior art to the present invention.

### DETAILED DESCRIPTION

The present invention provides a method of preparing a printed substrate comprising printing an aqueous inkjet ink composition to a substrate and thermally curing the printed ink by heating at a temperature of at least 80°C, wherein the aqueous inkjet ink composition comprises a first component which is an acid-functional water-soluble or water-dispersible resin and a second component which is a hydroxyl-functional material, wherein the hydroxyl-functional material comprises a hydroxyl-functional polyurethane dispersion having a hydroxyl value of ≥ 25 mgKOH/g (based on the dry polymer weight); and/or a hydroxyl-functional organically modified colloidal silica, wherein the acid-functional water-soluble or water-dispersible resin is selected from styrene and acrylic copolymers which are defined as an acid-functional polymer selected from homopolymers and copolymers of any blend of styrene, styrene-derivative, methacrylate and acrylate monomers.

The present invention also provides a thermally curable aqueous inkjet composition comprising:
(a) an acid functional water-soluble or water-dispersible resin, wherein the acid-functional resin is at least partially neutralized with an involatile base, wherein the acid-functional water-soluble or water-dispersible resin is selected from styrene and acrylic copolymers which are defined as an acid-functional polymer selected from homopolymers and copolymers of any blend of styrene, styrene-derivative, methacrylate and acrylate monomers, and wherein the involatile base is an inorganic base or an organic base having a boiling point in excess of 100°C; and
(b) a hydroxyl-functional material, wherein the hydroxyl-functional material comprises a hydroxyl-functional polyurethane dispersion having a hydroxyl value of ≥ 25 mgKOH/g (based on the dry polymer weight), a hydroxyl-functional organically modified colloidal silica or a combination thereof.

The present invention further provides a printed substrate comprising the composition of the invention, wherein the substrate is a metal or a textile.

The invention describes aqueous printing inkjet ink compositions (also referred to as aqueous inkjet ink compositions or aqueous inkjet compositions) that are thermally curable, producing prints with excellent water resistance. The printing inks of the invention, which are preferably used in inkjet printing, are suitable for a number of applications where a thermal curing process is normal, such as textiles printing, the printing of metal decoration (e.g. can printing), automotive coatings, décor, etc.

Particularly preferred acid-functional resins include acrylic copolymer dispersions, acrylic copolymer solution polymers, and copolymers of styrene and maleic anhydride. Other resins may include polyester dispersions, especially sulfopolyester types, and anionic polyurethane dispersions.

The acid groups of the acid-functional resin may be neutralized with any organic or inorganic base, including but not limited to ammonia, amines such as triethylamine, tripropylamine, ethanolamine, diethanolamine, triethanolamine, tripropanolamine, triisopropanolamine, N-methylethanolamine, dimethylethanolamine and arginine, sodium hydroxide and potassium hydroxide. Preferably the acid-functional resin is neutralized with an involatile base. As used herein, an involatile base is an inorganic base such as sodium hydroxide, or an organic base having a boiling point in excess of 100°C, preferably in excess of 125°C and more preferably in excess of 150°C. As used herein, an involatile base does not include ammonia. If an organic amine is used to neutralize the acid-functional resin of the invention it should preferably have a boiling point of at least 125°C, preferably at least 150°C, and more preferably at least 200°C. Preferably, the acid groups of the resin of the first component are neutralized with potassium hydroxide, sodium hydroxide, ethanolamine, N-methylethanolamine or dimethylethanolamine.

There is no restriction on the nature of the acid group, but carboxylic acids are preferred.

The acid value of the resin based on the dry polymer weight, should preferably be 10 mgKOH/g or greater, preferably 20 mgKOH/g or greater, and more preferably 50 mgKOH/g or greater.

From the foregoing it can be appreciated that the current invention, especially when the first and second components (i.e. the acid-functional resin and the hydroxyl-functional material) comprise polymers with molecular weights in excess of 1000 Daltons, is advantageous in that it does not require the use of potentially hazardous low molecular weight crosslinkers (i.e. crosslinkers having a molecular weight of less than 1000 Daltons) and furthermore allows for the preparation of aqueous inkjet printing inks having excellent long term stability at temperatures up to 50°C and even up to 60°C. Furthermore, even when inks prepared according to the invention are dried at temperatures up to 50°C, they remain resoluble which is highly desirable for inkjet printing.

The hydroxyl-functional compound which can esterify with the acid groups of the acid-functional resin is selected from hydroxyl-functional polyurethane dispersions having a hydroxyl value of ≥ 25 mgKOH/g (based on the dry polymer weight) and/or organically modified colloidal silicas. Particularly preferred are hydroxyl-functional polyurethane dispersions having a hydroxyl value of ≥ 25 mgKOH/g (based on the dry polymer weight). The hydroxyl value of the second component (i.e. the hydroxyl-functional material) of the invention may preferably be greater than 25 mgKOH/g, and more preferably 50 mgKOH/g or greater, based on the dry weight. It will be appreciated that the hydroxyl-functional compound is water-soluble or water-dispersible.

A feature of the invention is that the printing inks have excellent resolubility. Resolubility is a highly desirable feature, especially for inkjet printing applications, and denotes the ability of an ink to redissolve or redisperse into itself, or a suitable flushing solution, after it has partially, or fully dried. If an ink was to irreversibly dry in the nozzles of an inkjet printhead it would cause blockage of the nozzles with consequential loss of printing quality and potentially catastrophic and expensive loss of the printhead itself. The inventors have found that when the inkjet composition includes an acid-functional resin (such as an acrylic copolymer), then neutralization of the carboxylic acid groups with a base (such as sodium hydroxide) produces inks with enhanced resolubility, clearly an advantageous property for inkjet printing.

To thermally cure the inks of the invention, temperatures greater than 80°C, preferably greater than 100°C and most preferably greater than 120°C are used and the inks are preferably exposed to the elevated curing temperatures for at least 15 seconds and more preferably at least 30 seconds. Although there is no upper restriction on the curing time, the inks are preferably exposed to elevated curing temperatures for 360 seconds or less. Preferably, the inks are cured for 15 - 360 seconds, more preferably 15 - 180 seconds, even more preferably 15 - 120, even more preferably still 15 - 60 seconds. Optionally, the inks may be dried prior to curing using conventional driers in the art such as hot-air knives and near infrared driers. It will be understood that any optional drying step is effected at a temperature below and/or duration shorter than that of the curing step.

An advantage of the invention is that the two principal components of the thermally curable printing ink composition are either both polymeric or a combination of a polymer and a colloidal silica. There is no need for low molecular weight thermal crosslinkers such as carbodiimides, oxazolines, melamine-formaldehydes, glyoxals, epoxies, isocyanates (including blocked types), aziridines, etc. which have been reported elsewhere in the prior art to achieve the advantages of the present invention. The use of the principal components according to the invention are advantageous with respect to health and safety, especially when compared with a number of conventional crosslinkers previously outlined. Furthermore, the inks of the invention are very stable, showing no significant changes in viscosity or pH when stored for extended periods at room temperature or at 50°C, for 4 weeks.

The compositions and ratios of the two principal components of the inventive inks can be adjusted to enable desired properties after thermal curing, including; flexibility, adhesion, abrasion resistance, wash resistance, etc. Thus, the invention has tremendous utility in enabling crosslinked ink and coating compositions suitable for a number of applications including textiles printing, metal (can) decoration, automotive coatings, décor printing, etc.

The invention is a straightforward approach in producing inks having excellent resolubility, whilst achieving excellent resistance properties after thermal curing.

The acid-functional resin should preferably have an acid number of 25 mgKOH/g or greater (based on the dry weight of the resin) and preferably the acid groups should be fully or partly neutralized with an inorganic base or an organic amine, preferably having a boiling point greater than 125°C, preferably greater than 150°C. The acid-functional resin is preferably an acrylic or styrene copolymer comprising one or more of acrylic acid, methacrylic acid, maleic anhydride and itaconic acid as part of the mixture used in preparing the copolymer.

Where the second component of the invention comprises a resin, it is a polyurethane dispersion having a hydroxyl value of 25 mgKOH, or greater, and more preferably 50 mgKOH/g or greater (based on dry resin weight).

There is no particular restriction on the ratio of the acid-functional resins to the hydroxyl-functional materials of the second component, based on dry weight. However, it is preferred that this ratio should be in the range 20:1 to 1:10, based on dry weight. More preferably, the ratio is no more than 10:1, preferably no more than 9:1, preferably no more than 4:1 (i.e. the acid functional resin is preferably present in an amount of no more than 10 times, preferably no more than 9 times, preferably no more than 4 times, the amount of the hydroxyl-functional resin). More preferably the ratio is in the range 5:1 to 1:5, more preferably 3:1 to 1:3 (based on dry weight).

Particularly when the second component is a hydroxyl-functional resin, the ratio of the acid-functional resin to the hydroxyl-functional resin is preferably no more than 9:1, and more preferably no more than 4:1, based on the dry weight

The second component of the invention may also comprise a hydroxyl-functional organically modified colloidal silica in addition to, or in place of the hydroxyl-functional resin. Where such a colloidal silica is used it is preferred that the average particle size (diameter) should be less than 100nm, preferably less than 50nm and most preferably less than 25nm.

Particularly when the second component is said colloidal silica it is preferred that the ratio of the acid functional resin to the colloidal silica of the second component should be less than 20:1 and more preferably less than 10:1, based on the dry weight. In other words, the acid functional resin is preferably present in an amount of no more than 20 times, preferably no more than 10 times, the amount of the colloidal silica component. Preferably the ratio is in the range of 10:1 to 1:10, preferably 5:1 to 1:5, preferably 3:1 to 1:3, and preferably the acid functional resin is present in an amount which is equal to or greater than the amount of the colloidal silica of the second component.

The inks, after printing, are thermally cured by heating, preferably to at least 80°C, more preferably to at least 100°C, preferably at least 120°C. There is no restriction on the time used to cure the printed inks, but it should be preferably at least 15 seconds, and preferably in the range of 15 to 180 seconds, preferably 15 to 120 seconds, more preferably 15 to 60 seconds, and preferably at least 30 seconds. After thermal curing, the inks of the invention are preferably highly water resistant.

The inks of the invention may be used in the printing, and especially the inkjet printing, of textiles, metal substrate decoration, including the printing of metal cans, décor printing, as well as other suitable substrates.

There are a number of technical advantages associated with the current invention, as previously described, including:
i. Highly resoluble inks through the preferential use of involatile bases to neutralize the resin of the first component. The resolubility of the inventive compositions is also promoted by the use of hydroxyl-functional PUDs in the second component of the invention.
ii. The use of hydroxyl-functional materials as crosslinkers in the second component of the invention, which are essentially regarded as safe. The use of hydroxyl-functional materials, such as hydroxyl-functional polyurethane dispersions, to cure with the acid-functional resin reduces the potential hazards associated with conventional crosslinkers reported in the prior art.
iii. Since a thermally induced curing process (most probably esterification between the acid and hydroxyl groups of the components) is used to crosslink the inventive compositions then the risk of low temperature crosslinking is minimized. This reduces the risk associated with the undesirable crosslinking of partially or fully dried compositions which may occur with those crosslinkers reported in the prior art. This is clearly advantageous for inkjet printing where the potential for low temperature crosslinking, and especially at temperatures below 50°C, should be minimized as much as possible.
iv. The use of inorganic bases, such as sodium hydroxide and potassium hydroxide, to neutralize the acid groups of the resin of the first component of the invention produce thermally cured prints that have superior solvent resistance compared with the use of equivalent resins neutralized with a conventional amine, such as ammonia.
v. Aqueous inkjet printing inks of the invention can be prepared with co-solvent (humectant) concentrations of ≤ 35% (w/w), more preferably ≤ 30% (w/w). The major part of the co-solvent component is preferably made up of water-soluble solvents with boiling points of preferably less than 200°C, resulting in inks having superior drying speeds compared with inkjet compositions comprising >35% (w/w) and even > 30% (w/w) of co-solvents, and where the co-solvent blend comprises water-soluble solvents with boiling points greater than 200°C.

Crosslinking temperatures, which should preferably be in excess of 100°C, make the inventive compositions well suited to a number of applications such as textiles printing, the printing of metal decoration (such as metal cans, automotive, industrial) and décor printing.

The commercial advantages of this technology are very much related to the technical advantages. An especially salient feature of the invention is the use of essentially benign crosslinking agents, such as hydroxyl-functional PUDs and hydroxyl-functional organically modified colloidal silicas to react with the acid groups of the resin of the first component of the invention. This is clearly desirable for the printing of textiles and food packaging (metal cans) where the benign nature of the principal two components is beneficial. For textiles printing, the use of amino resins, such as melamine formaldehydes, has been reported widely. However, there is growing concern about the evolution of formaldehyde during the thermal crosslinking of compositions comprising such crosslinkers, which is a limitation. The use of blocked isocyanates has also been widely reported and like amino resins, these crosslinkers are stable at ambient temperatures with crosslinking taking place, usually at temperatures in excess of 80°C depending on the nature of the blocking group. It should be noted that both these types of crosslinkers are more effective in reacting with resins bearing hydroxyl groups and less effective with acid-functional (and especially carboxylic acid functional) resins. Crosslinking agents which are effective with acid-functional resins, including polycarbodiimides, polyoxazolines, azridines, epoxies, ammonium zirconium carbonates, can crosslink at temperatures below 40°C, which makes their use in inkjet printing applications potentially problematic, especially so if the inks partially or fully dry in the nozzles of a printhead with the consequent risk of catastrophic loss of the printhead. A consequence of using a stable two-component acid-hydroxyl crosslinking technology according to the invention is that aqueous inkjet compositions having excellent resolubility and printhead open time can be readily prepared.

It is common, both in the prior art and what is practiced commercially, to use a blend of co-solvents (humectants) which can comprise either > 30% (w/w) of the ink composition and/or use solvents with high boiling points such as glycerol and diethylene glycol whose boiling points are 290°C and 245°C respectively. In a preferred embodiment of the invention, co-solvents with boiling points > 200°C should be minimized and preferably only used at concentrations of 5% (w/w), or less of the inventive compositions.

The acid-functional resin contains as part of its molecular structure acids which may react with the hydroxyl groups of the material of the second component of the inkjet printing inks. Preferably, the acid-functional water-soluble or water-dispersible resin is an acrylic or styrene copolymer. The acid-functional resin is water-soluble or water-dispersible. Water-dispersible resins are preferably anionically or non-ionically stabilized. The acids of the resin of the first component of the invention may be selected from any of carboxylic acid, sulphonic acid, phosphoric acid, phosphonic acid, with carboxylic acids being particularly preferred.

The use of low molecular weight polyfunctional acids (in addition to the acid-functional resin and the hydroxyl-functional material) is an optional feature of the invention and may include any of the following non-limiting cases; sebacic acid, hexanedioic acid, phthalic anhydride, trimellitic anhydride.

Where the acid-functional resin of the invention is a water-soluble or water-dispersible acrylic or styrene copolymer then any of the following, non-limiting monomers may be used in its preparation; styrene, methyl-styrene, methyl acrylate, methyl methacrylate, ethyl acrylate, ethyl methacrylate, butyl acrylate, butyl methacrylate, hexyl acrylate, hexyl methacrylate, ethylhexyl acrylate, ethylhexyl methacrylate, or any ester of acrylic or methacrylic acid, acrylic acid, methacrylic acid, itaconic acid, maleic anhydride, styrene sulphonic acid and its salts, 2-acrylamido-2-methylpropane sulfonic acid and its salts, vinyl acetate, any acrylamide or methacrylamide monomer. There is no particular limitation on the acid value, but it is preferably greater than 10, more preferably greater than 20 mgKOH/g, based on the dry weight of the polymer.

The inventors have found that it is preferable that the resin of the first component should be neutralized with an involatile base and any of the following non-limiting list may be used to partially or fully neutralize the acid groups of the resin of the first component; sodium hydroxide, potassium hydroxide, any organic amine with a boiling point in excess of 125°C, preferably in excess of 150°C, including (with reported boiling points in °C); dimethylethanolamine (134), N-methylethanolamine (160), ethanolamine (170), diethanolamine (269), triethanolamine (335), aminopropanol (184), arginine (368). The use of such involatile bases enhances the resolubility of the aqueous inkjet printing inks of the invention. Resolubility is a highly desirable feature of aqueous inkjet inks, as it denotes the ability of a partially, or fully, dried ink to redissolve or redisperse into itself or a suitable flushing solvent. A further advantage of an ink having good resolubility is that it makes the cleaning and purging of a printhead a more straightforward process, allowing for printhead recovery in the unfortunate event that the ink does dry. By using an involatile base according to the invention to neutralize the resin of the first component, the resolubility of the ink is enhanced. There is no restriction on the T_{g} of the resin of the first component, but it is preferably greater than 50°C.

As will be understood in the art, water-dispersible resins (such as acid functional styrene or acrylic copolymer dispersions) are prepared using emulsion polymerization using one or more suitable surfactant(s). It should be understood that there is no restriction on the nature of the surfactants that may be used in the preparation of the styrene or acrylic copolymer dispersions when used as a part of the first component of the invention and those skilled in the art will fully appreciate that any combination of anionic and non-ionic surfactants suitable for emulsion polymerization may be used.

The second component of the inventive aqueous inkjet printing inks of the invention comprises a hydroxyl-functional material, preferably any polyhydroxyl-functional material, that can thermally cured with the acid functional materials of the first component. Without wishing to be bound by theory, the inventors believe thermal curing is achieved via esterification of the acid-functional resin and hydroxyl-functional material.

A preferred class of polyhydroxyl-functional material is a water-dispersible or water-soluble resin including, but not limited to: hydroxyl-functional polyurethane dispersions having a hydroxyl value, based on the dry weight of the polymer, of ≥ 25 mgKOH/g. A particularly preferred resin of the second component is a hydroxyl-functional polyurethane dispersion (PUD) having a hydroxyl value, based on the dry weight of the polymer, of greater than 25 mgKOH/g, more preferably 50 mgKOH/g or greater and most preferably 100 mgKOH/g or greater. Such PUDs may be prepared by methods well known to those skilled in the art, and the high hydroxyl values of the PUD may be achieved by using an excess of diol, compared to diisocyanate, in the polyurethane preparation or by using chain terminating species such as ethanolamine and diethanolamine to end-cap the polyurethane. For the purposes of the current invention it is not important how the PUD is prepared other than that it possesses hydroxyl groups capable of reacting with the acid groups contained in the first resin component. Furthermore, there is no restriction on whether the PUD is anionically or non-ionically stabilized. In the first case, the PUD comprises acid groups as part of its polymeric structure which after neutralization with a suitable base confer the anionic stabilization mechanism enabling its dispersion. In the case of non-ionically stabilized PUDs it is usual to incorporate a hydrophilic segment as part of the polyurethane dispersion (such as a poly(ethylene oxide)) to enable its dispersion. Where the PUDs are anionically stabilized it is preferred that the acid value, based on the dry polymer weight, should be at least 10, and more preferably at least 20 mgKOH/g.

In a preferred embodiment, the hydroxyl-functional material is a hydroxyl-functional organically modified colloidal silica.

An especially novel feature of the invention is the optional use of organically modified colloidal silicas, such as the Bindzil CC range (ex. Akzo Nobel) as used in the examples, to form a part of the second component of the inkjet inks. As reported by the manufacturers, these are epoxysilane modified colloidal silicas bearing organic groups on the silica particle surface bearing hydroxyl groups which may take part in the curing reaction with the acid-functional resins of the first component. These colloidal silicas preferably have an average particle size of less than 100nm, and more preferably less than 50nm (particle diameter). Preferably, the organically modified silicas are sodium or ammonium stabilized.

There is no particular restriction on the total solid content contributed by the acid-functional resin and hydroxyl-functional second component to the final aqueous inkjet printing ink composition. However, it is preferred that the total solid content contributed by both components to the final ink formulation should be in the range 2.5% (w/w) to 30% (w/w), and more preferably in the range 5.0% (w/w) to 20.0% (w/w) of the final ink composition.

The aqueous inkjet printing inks of the invention preferably have viscosities, at 32°C, of less than 10.0 mPa.s.

The pH of the inks should preferably be in the range 5.0 to 10.0 and more preferably in the range 6.0 to 9.5.

As mentioned previously, the inks of the invention may be thermally cured at temperatures in excess of 80°C, preferably in excess of 100°C.

The inks of the invention may optionally comprise an esterification catalyst to promote the cure between the first and second components of the inventive compositions. Acid, base and transition metal-based catalysts are encompassed by the invention.

The inks of the invention may optionally comprise any additional crosslinker including but not limited to those comprising the following reactive species; polycarbodiimides (for example, Carbodilite, ex. Nisshinbo), carbodiimides, oxazoline-functional polymer crosslinkers (e.g. Epocros, ex. Nippon Shokubai), aziridines, amino resins (such as melamine-formaldehydes for example, Maprenal, ex. Ineos Melamines), isocyanates (including blocked isocyanates for example Vestanat, ex. Evonik), epoxies (for example Polycup, ex. Solenis), zinc ammonium carbonate solutions, nano zinc oxide (for example Oxylink, ex. Buhler). Although these crosslinkers are not required to achieve the advantages of the current invention, the inventors have surprisingly found that stable, resoluble inks can be prepared with these optional additional crosslinkers when combined with the key elements of the invention. When present, the amount of additional crosslinker is ≤10% (w/w), preferably less than 5% (w/w) of the composition.

In an alternative embodiment, the inks of the invention do not comprise conventional crosslinkers such as keto-hydrazide, keto-amine, acid-carbodiimide, acid-oxazoline, acid-aziridine and in a further alternative embodiment the inks of the invention do not comprise conventional crosslinkers such as keto-hydrazide, keto-amine, acid-carbodiimide, acid-oxazoline, acid-aziridine amino resins, such as melamine-formaldehydes and urea-formaldehydes, and blocked isocyanates. In a further alternative embodiment, the inks do not comprise an additional crosslinker.

A further, optional, feature of the invention is that where any water-soluble organic solvent is used, it should preferably have a boiling point of less than 250°C, and more preferably less than 200°C. Where solvents with boiling points of greater than 250°C are used their concentration in the ink should preferably be less than 10.0% (w/w) and more preferably less than 5.0% (w/w). The total concentration of water-soluble organic solvents should preferably be less than 35.0% (w/w), and more preferably less than 30.0 %(w/w) of the ink composition.

The inks of the invention may be printed via multipass or single pass printing processes, terms which are well understood in the industry.

The inks of the invention may be printed onto any suitable substrate, including those previously pre-coated with a suitable primer composition to enhance the print quality. Such primers typically comprise a multivalent metal salt which helps to 'fix' the ink, reducing print quality issues such as drop spread and intercolor bleed. It should be understood that although primers are not a requirement for the present invention, any suitable primer enhancing the print quality achievable with the inventive inks may be used.

### Definitions and Scope

Styrene and acrylic copolymers: These are a preferred class of acid-functional polymer (i.e. resin) that can be used in the preparation of the inks of the invention. These are solutions or dispersions (also referred to as emulsions and latexes) of homopolymers and copolymers of any blend of styrene, styrene-derivative, methacrylate and acrylate monomers. Although referred to as styrene-(meth)acrylic resin dispersions it should be understood that these materials may be essentially free of any styrene or styrene derivative (i.e. wherein preferably at least 90wt%, preferably at least 95wt%, preferably at least 99wt% of the resin is constituted by monomers other than styrene and/or styrene derivatives) or indeed composed largely of styrene and styrene derivatives (i.e. wherein preferably at least 40wt%, preferably at least 60wt%, preferably at least 80wt% of the resin is constituted by monomers of styrene and/or styrene derivatives). Accordingly, it will be understood that the term is used in the context of the invention to describe any resin dispersion (or solution polymer) produced by the free radical polymerization of any blend of ethylenically unsaturated monomers, and preferably comprising at least one of an acrylic, methacrylic or styrene monomer. It should be appreciated by those skilled in the art that it is not necessary to list all the monomers that may be used to produce such dispersions (or solutions) and that other monomers including vinyl, (meth)acrylamide and olefinic types may also form part of such resin solutions and dispersions. The resin dispersions are commonly prepared by emulsion polymerization, using any blend of anionic and non-ionic surfactants; surfactant free dispersions are also covered by the invention. Solution styrene and acrylic copolymers are typically prepared by solution or solvent free radical polymerization processes, with the polymer being brought into aqueous solution by the neutralization of the acid groups of the polymer.

Although there is no restriction on the T_{g} of the acid-functional polymer it is preferred that the T_{g} of the styrene-(meth)acrylic dispersion, or solution, is greater than 40°C, preferably greater than 50°C and most preferably greater than 60°C.

The invention also covers the use of core-shell styrene-(meth)acrylic resin dispersions where the resin particles are heterophasic in nature with two or more discrete polymer phases. If a core-shell styrene-(meth)acrylic resin dispersion is used, then at least one of the phases would preferably have a T_{g} according to the requirements outline above.

The acid value of the solution or dispersion polymer should preferably be at least 10 and more preferably at least 20 mgKOH/g, based on the dry weight of the polymer. As previously mentioned, the resin of the first component should preferably be at least partially neutralized with an involatile base which can preferably be selected from any of sodium hydroxide, potassium hydroxide or an organic amine having a boiling point of greater than 125°C, preferably greater than 150°C.

Polyurethane dispersion (PUD): Both anionically and non-ionically stabilized PUDs may be used. It is preferable that the PUDs have an average particle size of less than 200nm and more preferably less than 100nm. Furthermore, the PUD may be synthesized from any blend of polyol precursors including, but not limited to; polyether diols, polyester diols, polyacrylic diols and polycarbonate diols or blends and hybrids thereof. It is preferred that the PUDs used in the invention have a T_{g} of less than 80°C. The PUD has a hydroxyl value of at least 25 mgKOH/g, or greater and more preferably 50 mgKOH, or greater, based on the dry polymer weight.

Solution polymer: As understood in the printing art, the term "solution polymer" used herein (also known as an alkali-soluble polymer) typically refers to an acrylic, styrene or styrene-acrylic copolymers usually comprising acrylic or methacrylic acid as part of the monomer blend. Suitable solution polymers are copolymers which comprise any of acrylic acid, methacrylic acid, maleic anhydride, itaconic acid, along with any blend of ethylenic, acrylic or methacrylic monomers including but not limited to styrene, methyl methacrylate, butyl acrylate, butyl methacrylate, ethyl acrylate, ethyl methacrylate, ethylhexyl acrylate, ethylhexyl methacrylate. When the carboxylic acid groups of the polymer are neutralized with a base the polymers can then be dissolved in water to form an aqueous solution. The molecular weight of such water-soluble (neutralized) polymers is typically less than 20,000.

T_{g} (glass transition temperature): T_{g} is measured by differential scanning calorimetry (DSC). Preferably, measurements were made according to the following standard test method and based on the method described in ASTM E1356-98. The sample was maintained under an atmosphere of dry nitrogen for the duration of the scan. A flow rate of 20 ml/min and Al pans were used. Samples (5 mg) were heated at 20 °C/min from 20°C to 350°C. The value of a T_{g} was determined as the extrapolated onset temperature of the glass transition observed on the DSC scans (heat flow (W/g) against temperature (°C)), as described in ASTM E1356-98.

Hydroxyl Value (OHV): This is defined as the number of milligrams of potassium hydroxide required to neutralize the acetic acid taken up on acetylation of one gram of a chemical substance that contains free hydroxyl groups. The hydroxyl value is suitably measured in accordance with the ISO 4629-1:2016(E).

Acid Value (AV): The mass of potassium hydroxide (KOH) in milligrams that is required to neutralize one gram of chemical substance. Unless stated otherwise, reference to the acid value is to the total acid value and is suitably measured in accordance with ISO 2114:2000(E) (method B) standard.

Organically modified colloidal silica: The second component of the invention may comprise these colloidal silicas which preferably have an average particle size of less than 100nm, preferably less than 50nm, and more preferably less than 25 nm (particle diameter). They are preferably prepared by the modification of colloidal silicas with an epoxy silane to produce an organic outer coating on the silica particle bearing hydroxyl groups which can cure with the acid functional resin of the invention.

Resolubility: This is a feature of the inks of the invention and is the ability of a partially, or fully dried ink, to redissolve or redisperse back into the ink fluid or a suitable flushing solution. For inkjet applications this is a most desirable feature as it reduces the risks associated with inks becoming irreversibly dried in the nozzles of an inkjet printhead. The inventors have shown by way of a simple test that inks prepared according to the invention have excellent resolubility.

Molecular weight: Unless otherwise stated, a reference to "molecular weight" or "average molecular weight" is a reference to the weight average molecular weight (Mw). The molecular weight is suitably measured by techniques known in the art such as gel permeation chromatography (GPC). Preferably, molecular weight is measured by comparison with a polystyrene standard. For instance, molecular weight determination may be conducted on a Hewlett-Packard 1050 Series HPLC system equipped with two GPC Ultrastyragel columns, 103 and 104 Å (5 µm mixed, 300 mm x 19 mm, Waters Millipore Corporation, Milford, MA, USA) and THF as mobile phase. The skilled person will appreciate that this definition of molecular weight applies to polymeric materials which typically have a molecular weight distribution.

Particle size/average particle size. In the context of the present invention, the terms "particle size" or "average particle size" refer to the volume distributed median particle diameter (equivalent spherical diameter corresponding to 50% of the volume of all the particles, read on the cumulative distribution curve relating volume % to the diameter of the particles - often referred to as the "D(v,0.5)" value). Particle size is preferably measured by laser light diffraction.

Nanoscale. In the context of the invention this refers to a particle having one dimension of less than 100nm, a commonly accepted definition of a nanoparticle. For colloidal silicas (and aluminas) this means that the average particle size is preferably less than 100nm, although particle sizes of less than 50nm are preferred.

Unless stated otherwise, the viscosities of the inks were measured using a Brookfield DV-II+ Pro Viscometer equipped with Spindle no.18, 100rpm, 32°C. The inkjet compositions according to the present invention preferably have a viscosity of no more than 20 mPa.s at application temperature (i.e. 32 °C), and more preferably no more than 10 mPa.s at 32 °C.

Where the acid-functional resin is a water-soluble or water-dispersible styrene or acrylic copolymer there are a large number of commercially available products including those sold under the trade names Joncryl^{®} (BASF), Revacryl^{®} (Synthomer), Hycar^{®} (Lubrizol), Neocryl^{®} (DSM), Neboplast^{®} (Necarbo), and the Picassian^{®} AC range (Picassian Polymers). It should be understood that this is not a limiting list and those skilled in the art should appreciate that any other styrene-(meth)acrylic resin dispersions and resin solutions meeting the requirements previously laid out could be used. A preferred embodiment of the invention is that the acid groups of these polymers should be neutralised with an inorganic base such as sodium hydroxide or potassium hydroxide or an organic base having a boiling point of greater than 125°C, preferably greater than 150°C. The inventors have shown that Joncryl 8055, a sodium hydroxide neutralised version of Joncryl 90, a styrene-acrylic copolymer emulsion having a T_{g} of 110°C, and an acid value of 76 (as reported by the supplier, BASF), produced inks having significantly superior resolubility compared with Joncryl 90. The inventors do not wish to be bound by any theory, but conjecture that the improved resolubility achieved with resins of the first component neutralised with inorganic or involatile organic bases results in what might best be described as a 'permanent salt'. If a volatile base such as ammonia or triethylamine is used, then it will quickly evaporate from an ink as it is exposed to the atmosphere, and starts to dry. As this happens the resin, and consequently the ink comprising it, becomes more hydrophobic, resulting in a loss of resolubility or redispersibility, as a consequence of the neutralised acid reverting to the non-neutralised acid.

The inventors have also found that the higher the hydroxyl value of a PUD when it is used as the hydroxyl-functional second component, the better is the resolubility of the ink. This is probably due to the increased hydrophilicity associated with PUDs having more hydroxyl groups as part of their structure. As mentioned previously, it is preferred that the hydroxyl value of a PUD should be greater than 25, more preferably greater than 50 and most preferably greater than 100 mgKOH/g, based on the dry polymer weight. PUDs are available very widely commercially, including those sold under the trademarks Neorez^{®} (DSM), Bayhydrol^{®} (Covestro), Sancure^{®} (Lubrizol), Syntegra^{®} (Dow), Luplen^{®} (BASF), Beetafin^{®} (BIP) and Daotan^{®} (Allnex). Other producers include Alberdingk Boley, Incorez and Stahl. It should be appreciated by those skilled in the art that any PUD meeting the requirements of the invention may be used in the preparation of aqueous inkjet compositions of the current invention.

The invention encompasses aromatic and aliphatic PUDs and further encompasses PUDs produced from polyether diols, polyester diols, polyacrylic diols and polycarbonate diols or any blend or hybrid thereof. As previously stated, the PUDs may be anionic or non-ionic in terms of their stabilization, or a combination of the two stabilization mechanisms.

Anionic PUDs are commonly produced by the inclusion of a carboxylic acid into the polymer structure of the PUD, for example by the urethane reaction of dimethylol propionic acid ('DMPA'). Where DMPA, or other acid-containing species, is incorporated into the PUD backbone then it may be neutralized with any organic or inorganic base to enable the anionic stabilizing mechanism. These various resin types may, where applicable, be neutralized using organic bases, including, but not limited to, ammonia, triethylamine, N-methylethanolamine, triethanolamine, triisopropanolamine, dimethyl aminoethanol, N-methyldiethanolamine or arginine. Alternatively, they may be neutralised by an inorganic base including but not limited to alkali metal oxides, alkali metal hydroxides or alkali metal carbonates, with sodium hydroxide or potassium hydroxide being the preferred inorganic bases. A key requirement of a PUD when used is that it should have pendant hydroxyl groups that can react via esterification with the acid groups of the resin of the first component of the inventive inks. PUDs having hydroxyl values of preferably greater than 25 mgKOH/g (based on the dry polymer weight) may be synthesised by a number of ways including using an excess of diol to diisocyanate to produce a hydroxyl terminated PUD or by using a hydroxyl-functional end-capping reagent such as ethanolamine or diethanolamine to react onto an isocyanate-functional PUD prepolymer. It should be understood that the method of preparing the hydroxyl-functional PUD of the invention is not important other than that it meets the requirements of the invention concerning hydroxyl value.

The preferred embodiments of the invention relating to the resin selections of the first and second components allow highly resoluble inks to be prepared without recourse to the use of co-solvents having boiling points in excess of 200°C and especially 250°C, such as glycerol and diethylene glycol, amongst others. The use of such involatile solvents at concentrations often in excess of 10% (w/w) of the ink formulation is a commonly used approach for inkjet printing inks, not only to raise the viscosity of the ink but also to ensure that the ink has acceptable resolubility. However, the use of such high boiling point solvents has the associated disadvantage of causing slow drying times of the inks, which is undesirable for high throughput printing. Although such high boiling point co-solvents may be used as part of the inventive ink compositions of the invention, using the preferred resin embodiments allows the preparation of inkjet inks with a reduced requirement for such high boiling point solvents. Therefore, inks comprising solvents with boiling points of less than 250°C, and more preferably less than 200°C, with excellent resolubility are preferred. Further to this, it is again common for aqueous inkjet inks to comprise organic co-solvents at concentrations in excess of 35% (w/w) of the ink composition. Inks according to the invention can be prepared with organic solvent concentrations of less than 35% (w/w), more preferably less than 30% (w/w) and even more preferably 25% (w/w) or less of the ink composition, especially so with solvents having boiling points of less than 200°C.

Although inks comprising the preferred embodiments of the invention do indeed have excellent resolubility, this is clearly to the detriment of the water resistance of any print, without curing. This is where the capacity of the inks of the invention to cure when prints are heated to temperatures in excess of 60°C, more preferably in excess of 80°C and even more preferably in excess of 100°C makes them useful for a number of printing applications where resistance of a print is a requirement including, but not limited to, surface print packaging, textiles printing, metal decoration (cans), décor, etc. The prior art teaches how conventional crosslinkers such as carbodiimides, amino resins and blocked isocyanates may be used to crosslink carboxylic acid or hydroxyl-functional resins. However, there are a number of possible disadvantages to using such crosslinkers including crosslinking occurring at temperatures below 50°C, and safety concerns. The current invention which uses polyurethanes or colloidal silicas as the components of the curing chemistry are essentially safe and the cure of the inks (probably via an esterification reaction) does not occur to any great extent at temperatures below 50°C.

The ink compositions according to the present invention include water. This would preferably not contain significant ionic impurities and is therefore preferably ion exchanged or distilled water. The amount of water used according to the present invention, including that which is supplied as part of raw materials used, is preferably 20 to 80%, more preferably 30 to 70% (w/w) of the entire ink composition.

The inks may also contain one or more water-compatible organic solvents, preferably at a level of between 1 and 35% by weight of the entire ink composition. Examples of suitable solvents may include those which are not highly flammable or volatile, typically a polyol, an alkylene glycol, an alkylene glycol ether or ether acetate type, with the following non-limiting examples: 4-hydroxy-4-methyl-2-pentanone, diethyelene glycol, diethylene glycol butyl ether, diethylene glycol ethyl ether, diethylene glycol methyl ether, diethylene glycol monoethyl ether acetate, diethylene glycol monopropyl ether, dipropylene glycol, dipropylene glycol ethyl ether, dipropylene glycol methyl ether, ethylene glycol butyl ether, ethylene glycol ethyl ether, ethylene glycol isopropyl ether, ethylene glycol methyl ether, ethylene glycol propyl ether, glycerine carbonate, N-methyl 2-pyrrolidone, glycerol, propylene glycol, propylene glycol ethyl ether, propylene glycol ethyl ether acetate, propylene glycol methyl ether, propylene glycol n-propyl ether, triethylene glycol, triethylene glycol butyl ether, triethylene glycol methyl ether, tripropylene glycol, tripropylene glycol methyl ether, N-methyl pyrollidone, urea, and the like. As mentioned previously, it is preferred that where such co-solvents are used, they should form less than 35% (w/w), preferably less than 30.0% (w/w), more preferably less than 25% (w/w), even more preferably 20.0% (w/w) or less of the ink composition. Furthermore, it is preferred that the concentration of solvents having boiling points of greater than 250°C should be less than 10.0% (w/w) and more preferably less than 5.0% (w/w) of the ink composition.

Since the products of the current invention are primarily water-based in nature, it is also preferable to include a biocide or anti-mold agent. Suitable examples include products based on, but not limited to, the following biocide structural types: benz-isothiazolinone, bromo-nitro-propane-diol, isothiazolinone, ethylenedioxydimethanol, or iodo-propynyl butyl carbamate. Some commercially available grades include those marketed under the trade names Intercide (Akcros Chemicals) or Nipacide (Clariant). Other types of biocide that could be considered include sodium dehydroacetate (Geogard 111S from Lonza), sodium benzoate (Vancide 51 from R. T. VANDERBILT), sodium pyridinethiol- l-oxide (Sodium Omadine from Arch Chemicals), sodium salt of o-phenylphenol (Dowicide A from DOW Chemical) and ethyl p-hydroxybenzoate (Nipastat Sodium from Aako). These are preferably used at an amount of 0.01 to 1.00% by mass in the ink composition.

Defoamers can also optionally be included in the formulation; these prevent the formation of foam during manufacture of the ink and also while jetting. Defoamers are particularly important with recirculating printheads. Examples of suitable defoamers include, but are not limited to, TEGO FOAMEX N, FOAMEX 1488, 1495, 3062, 7447, 800, 8030, 805, 8050, 810, 815N, 822, 825, 830, 831, 835, 840, 842, 843, 845, 855, 860, and 883, TEGO FOAMEX K3, TEGO FOAMEX K7/K8 and TEGO TWIN 4000 available from Evonik. Available from BYK are BYK-066N, 088, 055, 057, 1790, 020, BYK-A 530, 067A, and BYK 354. The additives DC62, DC65, DC 68, DC71 and DC74 are available from Dow Corning. Agitan 120, 150, 160, 271, 290, 298, 299, 350, 351, 731, 760, 761, and 777 are available from Munzing. Surfynol 104PA, AD01, DF-110, DF-58, DF-62, DF-66, DF-695, DF-70, and MD-20 are available from Air Products.

Surface control additives are often optionally used to control the surface tension of the ink, which is required to adjust the wetting on the face plate of the printhead, and also to give the desired drop spread on the substrate, or, in the case of multi pass inkjet printing, wet on dry drop spread. They can also be used to control the level of slip and scratch resistance of the coating. Examples of suitable surface control additives include but are not limited to TEGO FLOW 300, 370, and 425, TEGO GLIDE 100, 110, 130, 406, 410, 411, 415, 420, 432, 435, 440, 482, A115, and B1484, TEGO GLIDE ZG 400, TEGO RAD 2010, 2011, 2100, 2200N, 2250, 2300, 2500, 2600, 2650, and 2700, TEGO TWIN 4000 and 4100, TEGO WET 240, 250, 260, 265, 270, 280, 500, 505, and 510 and TEGO WET KL245, all available from Evonik. Available from BYK are BYK 333 and 337, BYK UV 3500, BYK 378, 347 and 361, BYK UV 3530 and 3570, CERAFLOUR 998 and 996, NANOBYK 3601, 3610, and 3650, and CERMAT 258. Available from Cytec are EBECRYL 350 and 1360, MODAFLOW 9200, and EBECRYL 341. From Sartomer the aliphatic silicone acrylate CN9800 may be used. Surfynol 104, 420, 440, 465, 485, 61, 82, and 2502 are available from Air Products. Multiwet BD, EF, SU, SO, and VE are available from Croda. Capstone FS-30, 31, 34, 35, 50, 51, 60, 61, 63, 64, 65, and 3100 are available from Du Pont.

Included in the ink formulation can optionally be a suitable de-aerator. These prevent the formation of air inclusions and pinholes in the cured coating. These also reduce rectified diffusion, which can cause reliability issues in the printhead. Non-limiting examples include the following products available from Evonik: TEGO AIREX 900, 910, 916, 920, 931, 936, 940, 944, 945, 950, 962, 980, and 986.

The ink compositions of the present invention may optionally contain one or more colorants, including pigments and/or dyes. Examples of suitable organic or inorganic pigments include carbon black, zinc oxide, titanium dioxide, phthalocyanine, anthraquinones, perylenes, carbazoles, monoazo and disazobenzimidazoles, rhodamines, indigoids, quinacridones, diazopyranthrones, dinitroanilines, pyrazoles, diazopyranthrones, pyrazoles, dianisidines, pyranthrones, tetracholoroisoindolines, dioxazines, monoazoacrylides and anthrapyrimidines. The dyes include but are not limited to azo dyes, anthraquinone dyes, xanthene dyes, azine dyes, combinations thereof and the like.

Commercial organic pigments classified according to Color Index International may be used, including, but not limited to, those according to the following trade designations: blue pigments PB1, PB15, PB15:1, PB15:2, PB15:3, PB15:4, PB15:6, PB16, PB60; brown pigments PB5, PB23, and PB265; green pigments PG1, PG7, PG10 and PG36; yellow pigments PY3, PY14, PY16, PY17, PY24, PY65, PY73, PY74 PY83, PY95, PY97, PY108, PY109,PY110, PY113, PY128, PY129,PY138, PY139, PY150, PY151, PY154, PY156, PY175, PY180 and PY213; orange pigments PO5, PO15, PO16, PO31, PO34, PO36, PO43, PO48, PO51, PO60, PO61 and PO71; red pigments PR4, PR5, PR7, PR9, PR22, PR23, PR48, PR48:2, PR49, PR112, PR122, PR123, PR149, PR166, PR168, PR170, PR177, PR179, PR190, PR202, PR206, PR207, PR224 and PR254: violet pigments PV19, PV23, PV32, PV37 and PV42; black pigments PBk1, PBk6, PBk7, PBk8, PBk9, PBk10, PBk11, PBk12, PBk13, PBk14, PBk17, PBk18, PBk19, PBk22, PBk23, PBk24, PBk25, PBk26, PBk27, PBk28, PBk29, PBk30, PBk31, PBk32, PBk33, PBk34, PBk35, NBk1, NBk2, NBk3, NBk4, NBk6; combinations thereof, and the like.

The pigments are milled to typically less than 1 micrometer after milling with a preferred particle size distribution of 10-500 nm, more preferably 10-350 nm to have better transparency and a wide color gamut.

In order to incorporate the above-described pigments to the inventive compositions, it is preferable that the pigments are manufactured and stably stored as a pigment concentrate in water. This is typically achieved by dispersing the pigment into a water-soluble or water-dispersible resin using a water-soluble and/or a water-dispersible surfactant which introduces hydrophilic functional groups into the surface of the pigment particles. Examples of these dispersing resins are numerous and could include polyvinyl alcohols, polyacrylic acid, acrylic acid-acrylonitrile copolymers, vinyl acetate-acrylate copolymers, acrylic acid-acrylate copolymers, styrene-acrylic acid copolymers, styrene-methacrylic acid copolymers, styrene-methacrylic acid-acrylate copolymers, styrene-alpha methyl styrene-acrylic acid copolymers, styrene-alpha methyl styrene-acrylic acid-acrylate copolymers, styrene-maleic acid copolymers, styrene-maleic anhydride copolymers, vinyl naphthalene-acrylic acid copolymers, vinyl naphthalene-maleic acid copolymers, vinyl acetate-maleate copolymers, vinyl acetate-crotonic acid copolymers, and vinyl acetate-acrylic acid copolymers, and the salts thereof. The copolymers can be used in any form of random copolymer, block copolymer, alternating copolymer and graft copolymer. Examples of such resins include Joncryl 67, 678, 8500, 586, 611, 680, 682, 683 and 69 available from BASF. These resins are commonly neutralized with ammonia to enable the preparation of polymer solutions. It is also possible to neutralize such resins with any other organic amine, or indeed an inorganic base. It should be understood that these dispersants do not form part of the inventive composition as outlined above.

Examples of surfactants used for the pigment dispersion include, but are not limited to, anionic surfactants such as alkane sulphonates, alpha-olefin sulphonates, alkyl benzene sulphonates, alkyl naphthalene sulphonates, acyl methyl taurinates, dialkyl sulfosuccinates, alkyl sulfates, sulfurized olefins, polyoxyethylene alkyl ether phosphates, polycarboxylic acids and mono glycerol phosphate, amphoteric surfactants such as alkylpyridinium salts and non-ionic surfactants such as polyoxyethylene alkyl ethers, polyoxyethylene alkyl phenyl ethers, polyoxyethylene alkyl esters, polyoxyethylene alkyl amides, glycerol alkyl esters and sorbitan alkyl esters. Examples include EFKA 1000, 4000, 5000 and 6000 series products from BASF, Tamol series products from Dow, and Solsperse 27,000, 40,000, 44,000, 46,000 and 47,000 from Lubrizol.

The foregoing describes the key components of the aqueous inkjet compositions prepared according to the invention. It should be understood that a number of other elements are required to prepare a capable inkjet composition, including solvents, pigment dispersions, surfactants, additives, etc.

The inkjet compositions of the current invention are suitable for printing by either multipass or single-pass operations, terms well understood within the industry. The applications that are covered by the invention include, but are not limited to, the multipass printing of textiles, including cotton-rich fabrics, the single-pass printing of textiles, the multipass printing of packaging, including cartonboard, the single pass printing of packaging, including corrugated, cartonboard and flexible packaging, the single pass and multipass printing of metal substrates including metal decoration of cans and décor printing. In all cases the printing of the inventive inkjet compositions may be preceded by the application of a print-receptive primer to the substrate to be printed. The substrates to be printed, especially packaging substrates including polyester films, polypropylene films, nylon films, cellulose acetate films, polyethylene films, aluminum foils, metal sheets and rolls and any coated derivative thereof may be further treated prior to printing via corona discharge or plasma treatments to enhance the adhesion and print receptivity. Likewise, the printed material may be subject to further operations to realize a final product, including but not limited to, over-lacquering, lamination, etc.

### EXAMPLES

The invention is further described by the following non-limiting examples which further illustrate the invention, and are not intended, nor should they be interpreted to, limit the scope of the invention.

### Materials:

Joncryl 90: A styrene-acrylic copolymer emulsion, with an acid value of about 75 mgKOH/g, a T_{g} of 110°C, and neutralized with ammonia (as reported by the supplier; BASF).
Joncryl 8055: Equivalent to Joncryl 90, but neutralized with sodium hydroxide.
Joncryl 8083: An ethanolamine (boiling point of 170°C) neutralized aqueous solution of an acrylic copolymer (ex. BASF).
Neorez R605: a polyurethane dispersion, with a hydroxyl value of less than 10 mgKOH/g (ex. DSM).
Daotan 6425: a polyurethane dispersion, with a hydroxyl value of about 55 mgKOH/g (ex. Allnex).
Daotan 7010: a polyurethane dispersion, with a hydroxyl value of about 105 mgKOH/g.
Daotan 7000: a polyurethane dispersion, with a hydroxyl value of about 170 mgKOH/g.
Tegowet KL245: A surfactant (ex. Evonik).
Bindzil CC301: a hydroxyl-functional epoxy silane modified colloidal silica (ex. Akzo Nobel).
Propylene glycol: A water-soluble co-solvent, with a boiling point of around 188°C.
Carbodilite V-02-L2: A water-soluble polycarbodiimide crosslinker (ex. Nishinbo).
Maprenal MF920/75: A water-soluble amino resin crosslinker (ex. Ineos).
Trixene BI201: An aqueous blocked isocyanate crosslinker (ex. Baxenden).
Cyan Pigment Dispersion: A proprietary dispersion of cyan 15:3 pigment, comprising about 16% (w/w) pigment.

### Test Methods:

Viscosity: The viscosities of the inks were measured at 32°C using a Brookfield DV-II+ Pro Viscometer equipped with Spindle no.18, at 100rpm.

Resolubility Testing: Approximately 60µm ink films were applied to glass slides using a No.6 K-Bar applicator (ex. RK Print). The inks were then dried for 15 minutes at 50°C, before being immersed in deionized water or an aqueous solution comprising 25% propylene glycol, 0.5% Tegowet KL245 and 0.5% triethanolamine (this is referred to as the 'Varnish' in the tables below). Resolubility was assessed as: "resoluble" (meaning that the dried ink film dispersed in the soaking fluid (i.e. water or varnish) in less than 1 minute, with no visible signs of any undissolved ink), "partial" (meaning that there was evidence of the ink dispersing in the soaking fluid, but with minor undissolved ink particles persisting for more than 5 minutes), "slight" (meaning that the ink print breaks up in to flakes which persist for more than 5 minutes, with very little evidence of the ink redispersing into the soaking fluid), "insoluble" (meaning that there was no evidence for the ink redispersing into the soaking medium).

Print Preparation: The inks were applied to white polyester coated steel plates at 6µm, using a No.1 K-Bar applicator (ex. RK Print). The prints were then dried for 30 seconds using a hot air blower. The prints were allowed to stand at room temperature for a further 15 minutes before being tested for solvent resistance. For the thermal curing, in most cases, the prints were then heated to 150°C for 60 seconds. However, other temperatures and curing times were evaluated as will be illustrated by way of the examples in Table 6.

Water Resistance: The water resistance of the prints was determined by rubbing the print with a cotton wool bud soaked in water. The number of double rubs required to remove or disrupt the print was the recorded; this is a test well known in the industry.

Ethanol Resistance: The same as the water resistance test but using ethanol.

Tape Adhesion: After thermal curing, the adhesion of the prints was assessed by applying an adhesive tape (ISO 2409 tape, ex. Elcometer) to the print surface, waiting 10 seconds and then peeling the tape away from the print. The amount of ink remaining as an approximate % area was recorded (100% being equivalent to complete adhesion pass and 0% a complete fail).

First Set of Inks prepared according to the Invention, demonstrating the Thermal Cure

To demonstrate the key aspects of the invention, a series of inks were prepared according to the following general formulation:

**Table 1: Aqueous Inkjet Formulations**

| Component | % (w/w) |
|---|---|
| Deionized water | 14.6 |
| Propylene Glycol | 30.0 |
| Tegowet KL245 | 0.2 |
| Triethanolamine | 0.2 |
| Polymer Dispersion/Solution | 30.0 |
| Cyan Pigment Dispersion | 25.0 |

The components were added in the sequence as listed in Table 1, starting with deionized water, with stirring between additions. After all the ink components were added, the ink was stirred for a further 5 minutes using a Silverson high shear mixer. Table 2 provides details of the polymer dispersion blends used in this first set of experiments. In Table 2, comparative examples are denoted as C1, C2, etc. and inventive ink compositions as I1, I2, etc. The prints were cured at 150°C, for 60 seconds.

**Table 2: Polymer Dispersion Blends and Results for the First Set of Inks**

| | C1 | C2 | C3 | C4 | C5 | C6 | I1 | I2 | I3 | I4 | C7 |
|---|---|---|---|---|---|---|---|---|---|---|---|
| % Joncryl 90 | 30.0 | | | | | | 15 | | | | |
| % Joncryl 8055 | | 30 | | | | | | 15 | 15 | 15 | 15 |
| % Daotan 7000 | | | 30 | | | | 15 | 15 | | | |
| % Daotan 7010 | | | | 30 | | | | | 15 | | |
| % Daotan 6425 | | | | | 30 | | | | | 15 | |
| % Neorez R605 | | | | | | 30 | | | | | 15 |
| | | | | | | | | | | | |
| Viscosity (mPa.s) | 7.14 | 7.17 | 6.75 | 6.81 | 6.72 | 6.18 | 7.26 | 7.35 | 7.44 | 7.11 | 6.78 |
| H2O Resolubility | Insoluble | Partial | Resoluble | Partial | Slight | Insoluble | Slight | Resoluble | Partial | Slight | Insoluble |
| Varnish Resolubility | Insoluble | Resoluble | Resoluble | Resoluble | Partial | Insoluble | Partial | Resoluble | Resoluble | Resoluble | Insoluble |
| H₂O rubs before Cure | >100 | 1 | 1 | 2 - 3 | 4 | >100 | 6 | 1 | 2-3 | 1 | 3 - 4 |
| H₂O Rubs after cure | >100 | 60 | 40 | 80 | 80 | >100 | >100 | >100 | >100 | >100 | >100 |
| EtOH Rubs after cure | 15 | 30-40 | 1 - 2 | 3 | 1 - 2 | 1 - 2 | 6 | 15 | 12 | 4 | 3 - 4 |
| Adhesion | 100% | 100% | 100% | 100% | 100% | 100% | 100% | 100% | 100% | 100% | 100% |

The comparative examples highlight a number of features that the invention encompasses by way of the blends of acid functional resins and the second hydroxyl-functional materials (crosslinker). Comparing C1 with C2 shows the benefit of using an involatile base to neutralize the first acid functional resin of the invention, upon the resolubility of the ink, with the ink comprising Joncryl 8055 significantly more resoluble than Joncryl 90. The second thing to note with the Comparative examples is the impact of the hydroxyl value of the PUD on resolubility, with resolubility of the ink increasing with the hydroxyl value of the PUD. The disadvantage of using such highly resoluble resins is that even after being heated to 150°C for 1 minute, the resistance of the prints remains deficient. Only when an acid functional resin is combined with the second hydroxyl-functional crosslinker is satisfactory water resistance of the print achieved after cure together with satisfactory resolubility, thereby confirming the principal feature of the invention. A further benefit of using the styrene-acrylic copolymer dispersion neutralized with sodium hydroxide is that it improves the ethanol resistance of the cured prints.

Second Set of Inks Demonstrating the use of an Acid Functional Solution Polymer and Organically Modified Colloidal Silica according to the Invention

Table 3 provides the details of the resin and resin/silica blends of the second set of experiments. For Inventive Examples I7 to I9 the water content of the inks was reduced accordingly, compared with the formulation of Table 1, to allow for the addition of the organically modified colloidal silica, Bindzil CC301, by 5.0, 10.0 and 15.0% (w/w) respectively.

**Table 3: Inclusion of a Solution Acrylic Copolymer and Organically Modified Colloidal Silica**

| | C2 | I2 | I5 | C8 | I6 | I7 | I8 | I9 |
|---|---|---|---|---|---|---|---|---|
| % Joncryl 8055 | 30 | 15 | 10 | - | - | 25 | 25 | 25 |
| % Daotan 7000 | - | 15 | 15 | - | 15 | - | - | - |
| % Joncryl 8083 | - | - | 5 | 30 | 15 | - | - | - |
| % Bindzil CC301 | - | - | - | - | - | 5 | 10 | 15 |
| Viscosity (mPa.s) | 7.17 | 7.35 | 8.49 | 8.73 | 8.19 | 7.77 | 8.40 | 9.51 |
| Varnish Resolubility | Resoluble | Resoluble | Resoluble | Slight | Resoluble | Resoluble | Resoluble | Resoluble |
| H₂O rubs before cure | 1 | 1 | 1 | 1 | 1 | 1 | 1 | 1 |
| H₂O Rubs after cure | 60 | >100 | >100 | >100 | >100 | >100 | >100 | >100 |
| EtOH Rubs after cure | 30-40 | 15 | 20 | 5 | 10 | 45 | 70 | 90 |
| Adhesion | 100% | 100% | 100% | 100% | 100% | 100% | 100% | 100% |

One of the key findings presented in Table 3 is how an acid functional polymer dispersion (Joncryl 8055) can be very effectively thermally cured with a hydroxyl-functional organically modified colloidal silica (Inventive examples 7, 8 and 9) with both excellent water and ethanol resistance achievable. All the Inventive inks presented in Table 3 had excellent resolubility in the aqueous solution containing propylene glycol, Tegowet KL245 and triethanolamine ('Varnish').

Inks showing the Impact of the Resin Dispersion Blend Ratio and Effect of Co-Solvent Content

Table 4 shows the compositions and test results for a number of Inventive compositions with different blend ratios of Joncryl 8055 to Daotan 7000, and also compositions with different concentrations of the co-solvent, propylene glycol. Where the concentration of propylene glycol was reduced, additional water was added to the inks prepared according to Table 1, to make up the difference.

**Table 4: Resin Dispersion Blend Ratio and Co-Solvent Concentration Effects**

| | I2 | I10 | I11 | I12 | I13 | I14 | I15 |
|---|---|---|---|---|---|---|---|
| % Joncryl 8055 | 15.0 | 25.0 | 20.0 | 10.0 | 15.0 | 15.0 | 15.0 |
| % Daotan 7000 | 15.0 | 5.0 | 10.0 | 20.0 | 15.0 | 15.0 | 15.0 |
| % Propylene Glycol | 30.0 | 30.0 | 30.0 | 30.0 | 25.0 | 20.0 | 15.0 |
| Viscosity | 7.35 | 8.43 | 8.79 | 8.22 | 6.75 | 5.55 | 4.47 |
| Varnish Resolubility | Resoluble | Resoluble | Resoluble | Resoluble | Resoluble | Resoluble | Resoluble¹ |
| H2O rubs before cure | 1 | 1 | 1 | 1 | 1 | 1 | 1 |
| H2O Rubs after cure | >100 | >100 | >100 | >100 | >100 | >100 | >100 |
| EtOH Rubs after cure | 15 | 30 | 25 | 10 | 15 | 15 | 15 |
| Adhesion | 100% | 100% | 100% | 100% | 100% | 100% | 100% |

| | | | | | | | |
|---|---|---|---|---|---|---|---|
| ¹Note to Table 4: Inventive Example 15 was not immediately resoluble in the aqueous solution containing propylene glycol, triethanolamine and Tegowet KL245. However, complete resolubility was achieved after 10 minutes immersion. | | | | | | | |

The results in Table 4 show that inks comprising any blend of Joncryl 8055 and Daotan 7000 deliver significantly superior water resistance after cure compared with the comparative examples C2 and C3 containing just the individual resin dispersions. This shows again how such compositions can cure by thermal treatment. Reducing the propylene glycol content of the inks from 30.0 to 15.0% (w/w) did not have any deleterious impact on the resolubility of the inks. Although Inventive example 15 did take a little longer to fully resolubilize it again proved the excellent resolubility of inks prepared using features of the invention.

### Inks Comprising Additional Crosslinkers

As discussed previously, optional crosslinking agents can be added to inks prepared according to the invention. Table 5 provides details of the ink compositions along with the test results. The amount of deionized water used to prepare the inks as laid out in Table 1 was reduced accordingly.

**Table 5: Inventive Inks Comprising Additional Crosslinkers**

| | I16 | I17 | I18 | I19 | 120 | I21 | I22 |
|---|---|---|---|---|---|---|---|
| % Joncryl 8055 | 20.0 | 10.0 | 10.0 | 20.0 | 10.0 | 10.0 | 10.0 |
| % Daotan 7000 | 10.0 | 20.0 | 20.0 | 10.0 | 20.0 | 20.0 | 20.0 |
| % Propylene Glycol | 25.0 | 25.0 | 25.0 | 25.0 | 25.0 | 25.0 | 25.0 |
| Carbodilite V-02-L2 | 1.0 | 1.0 | 2.5 | - | - | - | - |
| Maprenal MF920/75 | - | - | - | 2.5 | 2.5 | 5.0 | - |
| Trixene BI201 | - | - | - | - | - | - | 5.0 |
| Viscosity | 7.23 | 6.57 | 7.32 | 7.77 | 7.35 | 8.16 | 7.86 |
| Varnish Resolubility | Partial | Resoluble | Partial | Resoluble | Resoluble | Resoluble | Resoluble |
| H2O rubs before cure | 1 | 1 | 1 | 1 | 1 | 1 | 1 |
| H2O Rubs after cure | >100 | >100 | >100 | >100 | >100 | >100 | >100 |
| EtOH Rubs after cure | 25 | 5 | 8 | 40 | 12 | 25 | 5 |
| Adhesion | 100% | 100% | 100% | 100% | 100% | 100% | 100% |

The Effect of the Curing Conditions upon the Resistance Properties of Ink Prints

To show the impact of the thermal curing conditions, Inventive Example 2 was applied to the metal plate substrate, as previously described, and then cured according to the conditions laid out in Table 6. The water and ethanol resistance of the prints was assessed for the cured prints.

**Table 6: Effect of Curing Conditions on Inventive Example 2**

| Temperature (°C) | Time | Water Resistance (Double Rubs) | Ethanol Resistance (Double Rubs) |
|---|---|---|---|
| 25 | 10 mins | 1 | 1 |
| 25 | 7 days | 10 | 1 |
| 150 | 15 seconds | 20 | 2 |
| 150 | 30 seconds | 60 | 4 |
| 150 | 60 seconds | >100 | 15 |
| 150 | 120 seconds | >100 | 20 |
| 150 | 180 seconds | >100 | 30 |
| 80 | 60 seconds | 15 | 2 |
| 90 | 60 seconds | 20 | 3 |
| 100 | 60 seconds | 20 | 4 |
| 110 | 60 seconds | 30 | 7 |
| 120 | 60 seconds | 50 | 10 |
| 130 | 60 seconds | 70 | 10 |
| 140 | 60 seconds | >100 | 15 |
| 150 | 60 seconds | >100 | 15 |
| 160 | 60 seconds | >100 | 30 |
| 170 | 60 seconds | >100 | 35 |

A key result in Table 6 is that for the print allowed to stand at room temperature (25°C) for 7 days no curing was observed as evidenced by the water and ethanol resistance values (10 and 1 respectively). These values probably represent the maximum resistance that a print of an ink prepared according to the invention can achieve without being thermally cured. Any increase in either the water resistance or ethanol resistance beyond this baseline can be construed as cure. Therefore, it can be seen that temperatures as low as 80°C can improve the resistance properties of Inventive Example 2, although temperatures greater than 100 and more so 120°C, help to deliver even better cure.

Inks prepared according to the invention have been successfully, and reliably, jetted from a Fujifilm Dimatix Samba printhead with open times of greater than 30 minutes, no nozzle dropout and no start-up issues.

## Claims

1. A method of preparing a printed substrate comprising printing an aqueous inkjet ink composition to a substrate and thermally curing the printed ink by heating at a temperature of at least 80°C, wherein the aqueous inkjet ink composition comprises a first component which is an acid-functional water-soluble or water-dispersible resin and a second component which is a hydroxyl-functional material, wherein the hydroxyl-functional material comprises a hydroxyl-functional polyurethane dispersion having a hydroxyl value of ≥ 25 mgKOH/g (based on the dry polymer weight) and/or a hydroxyl-functional organically modified colloidal silica, wherein the acid-functional water-soluble or water-dispersible resin is selected from styrene and acrylic copolymers which are defined as an acid-functional polymer selected from homopolymers and copolymers of any blend of styrene, styrene-derivative, methacrylate and acrylate monomers.

2. The method of claim 1 wherein printing is via inkjet printing; wherein heating is at a temperature of at least 100°C; and/or wherein heating is for at least 15 seconds, preferably for at least 30 seconds.

3. A thermally curable aqueous inkjet composition comprising:
(a) an acid functional water-soluble or water-dispersible resin, wherein the acid-functional resin is at least partially neutralized with an involatile base, wherein the acid-functional water-soluble or water-dispersible resin is selected from styrene and acrylic copolymers which are defined as an acid-functional polymer selected from homopolymers and copolymers of any blend of styrene, styrene-derivative, methacrylate and acrylate monomers, and wherein the involatile base is an inorganic base or an organic base having a boiling point in excess of 100°C; and
(b) a hydroxyl-functional material, wherein the hydroxyl-functional material comprises a hydroxyl-functional polyurethane dispersion having a hydroxyl value of ≥ 25 mgKOH/g (based on the dry polymer weight), a hydroxyl-functional organically modified colloidal silica or a combination thereof.

4. The composition of claim 3, wherein the acid-functional water-soluble or water-dispersible resin has an acid value greater than 10 mgKOH/g (based on the dry polymer weight).

5. The composition of any of claims 3 or 4, wherein the composition has a viscosity of less than 10.0 mPa.s at 32°C as measured using a Brookfield DV-II+ Pro Viscometer equipped with Spindle no.18, 100rpm; and/or wherein the acid-functional water-soluble or water-dispersible resin is a styrene-acrylic copolymer.

6. The composition according to any of claims 3 - 5 wherein the hydroxyl-functional material has a hydroxyl value of ≥ 25 mgKOH/g (based on the dry weight) or
wherein the hydroxyl functional material comprises a polyurethane dispersion having a hydroxyl value of ≥ 25 mgKOH/g (based on the dry polymer weight).

7. The composition of any of claims 3 - 6, wherein the hydroxyl functional material comprises a hydroxyl functional organically modified colloidal silica.

8. The composition of any of claims 3 - 7, wherein the total solid content contributed by the acid-functional resin and hydroxyl-functional material is ≤ 20% (w/w); wherein the ratio of the acid-functional resin to the hydroxyl-functional material, based on dry weight, is between 10:1 and 1:10; and/or further comprising a concentration of organic water-soluble co-solvents of ≤ 35% (w/w), preferably ≤ 30% (w/w).

9. The composition of claim 8, wherein the concentration of water-soluble organic solvents having boiling points of greater than 250°C is ≤ 10% (w/w), preferably ≤ 5% (w/w); and/or wherein the concentration of water-soluble organic solvents having boiling points of greater than 200°C is ≤ 10% (w/w), preferably ≤ 5% (w/w).

10. The composition of any of claims 3 - 9 further comprising one or more colorant(s), including pigment(s) and/or dye(s), preferably comprising one or more pigment(s).

11. The method of any of claims 1 - 2 wherein the composition is as defined in any of claims 3 - 10.

12. The method of any of claims 1 - 2 or 11, wherein the substrate is metal or textile, preferably wherein the substrate is a cotton rich textile; and/or wherein the substrate is pre-coated with a print receptive primer.

13. A printed substrate comprising the composition of any one or more of claims 3-10,wherein the substrate is a metal or a textile, preferably wherein the substrate is a cotton rich textile.

14. The printed substrate of claim13, wherein the substrate is pre-coated with a print receptive primer.

## Patentansprüche

1. Verfahren zur Herstellung eines bedruckten Substrats, umfassend das Drucken einer wässrigen Tintenstrahltintenzusammensetzung auf ein Substrat und Wärmehärten der gedruckten Tinte durch Erhitzen auf eine Temperatur von wenigstens 80 °C, wobei die wässrige Tintenstrahltintenzusammensetzung eine erste Komponente, die ein säurefunktionelles wasserlösliches oder wasserdispergierbares Harz ist, und eine zweite Komponente, die ein hydroxyfunktionelles Material ist, umfasst, wobei das hydroxyfunktionelle Material eine hydroxyfunktionelle Polyurethandispersion mit einer Hydroxyzahl von ≥ 25 mgKOH/g (bezogen auf das Trockenpolymergewicht) und/oder eine hydroxyfunktionelle organisch modifizierte kolloidale Kieselsäure umfasst, wobei das säurefunktionelle wasserlösliche oder wasserdispergierbare Harz ausgewählt ist aus Styrol- und Acrylcopolymeren, die als säurefunktionelles Polymer ausgewählt aus Homopolymeren und Copolymeren aus beliebigen Gemischen von Styrol, Styrolderivaten, Methacrylat und Acrylatmonomeren definiert sind.

2. Verfahren nach Anspruch 1, wobei Drucken durch Tintenstrahldrucken ist; wobei Erhitzen auf eine Temperatur von wenigstens 100 °C ist; und/oder wobei Erhitzen für wenigstens 15 Sekunden, vorzugsweise für wenigstens 30 Sekunden, ist.

3. Wärmehärtbare wässrige Tintenstrahlzusammensetzung umfassend:
(a) ein säurefunktionelles wasserlösliches oder wasserdispergierbares Harz, wobei das säurefunktionelle Harz wenigstens zum Teil mit einer nichtflüchtigen Base neutralisiert ist, wobei das säurefunktionelle wasserlösliche oder wasserdispergierbare Harz ausgewählt ist aus Styrol- und Acrylcopolymeren, die als ein säurefunktionelles Polymer ausgewählt ist aus Homopolymeren und Copolymeren aus beliebigen Gemischen von Styrol, Styrolderivat, Methacrylat und Acrylatmonomeren definiert sind, und wobei die nichtflüchtige Base eine anorganische Base oder eine organische Base mit einem Siedepunkt von höher als 100 °C ist; und
(b) ein hydroxyfunktionelles Material, wobei das hydroxyfunktionelle Material eine hydroxyfunktionelle Polyurethandispersion mit einer Hydroxyzahl von ≥ 25 mgKOH/g (bezogen auf das Trockenpolymergewicht), eine hydroxyfunktionelle organisch modifizierte kolloidale Kieselsäure oder eine Kombination davon umfasst.

4. Zusammensetzung nach Anspruch 3, wobei das säurefunktionelle wasserlösliche oder wasserdispergierbare Harz eine Säurezahl von höher als 10 mgKOH/g (bezogen auf das Trockenpolymergewicht) aufweist.

5. Zusammensetzung nach einem der Ansprüche 3 oder 4, wobei die Zusammensetzung eine Viskosität von weniger als 10,0 MPa.s bei 32 °C, wie gemessen unter Verwendung eines Brookfield DV-II+ Pro Viscometer mit Spindel Nr. 18, 100 U/min, aufweist; und/oder wobei das säurefunktionelle wasserlösliche oder wasserdispergierbare Harz ein Styrol-Acryl-Copolymer ist.

6. Zusammensetzung nach einem der Ansprüche 3-5, wobei das hydroxyfunktionelle Material eine Hydroxyzahl von ≥ 25 mgKOH/g (bezogen auf das Trockengewicht) aufweist oder wobei das hydroxyfunktionelle Material eine Polyurethandispersion mit einer Hydroxyzahl von ≥ 25 mgKOH/g (bezogen auf das Trockenpolymergewicht) umfasst.

7. Zusammensetzung nach einem der Ansprüche 3-6, wobei das hydroxyfunktionelle Material ein hydroxyfunktionelles organisch modifiziertes kolloidales Siliciumdioxid umfasst.

8. Zusammensetzung nach einem der Ansprüche 3-7, wobei der Gesamtfeststoffgehalt, zu dem das säurefunktionelle Harz und das hydroxyfunktionelle Material beitragen, ≤ 20 % (w/w) beträgt; wobei das Verhältnis des säurefunktionellen Harzes zu dem hydroxyfunktionellen Material, bezogen auf das Trockengewicht, zwischen 10:1 und 1:10 liegt; und/oder ferner umfassend eine Konzentration an organischen wasserlöslichen Co-Lösungsmitteln von ≤ 35 % (w/w), vorzugsweise ≤ 30 % (w/w).

9. Zusammensetzung nach Anspruch 8, wobei die Konzentration wasserlöslicher organischer Lösungsmittel mit Siedepunkten von höher als 250 °C ≤ 10 % (w/w), vorzugsweise ≤ 5 % (w/w), beträgt; und/oder wobei die Konzentration wasserlöslicher organischer Lösungsmittel mit Siedepunkten von höher als 200°C ≤ 10 % (w/w), vorzugsweise ≤ 5 % (w/w), beträgt.

10. Zusammensetzung nach einem der Ansprüche 3-9, ferner umfassend ein oder mehrere Farbmittel, einschließlich Pigment(e) und/oder Farbstoff(e), vorzugsweise umfassend ein oder mehrere Pigmente.

11. Verfahren nach einem der Ansprüche 1-2, wobei die Zusammensetzung wie in einem der Ansprüche 3-10 definiert ist.

12. Verfahren nach einem der Ansprüche 1-2 oder 11, wobei das Substrat Metall oder Textil ist, wobei das Substrat vorzugsweise ein baumwollreiches Textil ist; und/oder wobei das Substrat mit einer druckaufnehmenden Grundierung vorbeschichtet ist.

13. Bedrucktes Substrat umfassend die Zusammensetzung nach einem oder mehreren der Ansprüche 3-10, wobei das Substrat ein Metall oder ein Textil ist, wobei das Substrat vorzugsweise ein baumwollreiches Textil ist.

14. Bedrucktes Substrat nach Anspruch 13, wobei das Substrat mit einer druckaufnehmenden Grundierung vorbeschichtet ist.

## Revendications

1. Procédé de préparation d'un substrat imprimé comprenant l'impression d'une composition aqueuse d'encre pour jet d'encre sur un substrat et le durcissement thermique de l'encre imprimée par chauffage à une température d'au moins 80 °C, dans lequel la composition aqueuse d'encre pour jet d'encre comprend un premier composant qui est une résine soluble dans l'eau ou dispersable dans l'eau à fonction acide et un second composant qui est un matériau à fonction hydroxyle, dans lequel le matériau à fonction hydroxyle comprend une dispersion de polyuréthane ayant un indice d'hydroxyle ≥ 25 mg de KOH/g (sur la base du poids sec du polymère) et/ou une silice colloïdale modifiée organiquement à fonction hydroxyle, dans lequel la résine soluble dans l'eau ou dispersible dans l'eau à fonction acide est choisie parmi les copolymères de styrène et acrylique qui sont définis comme un polymère à fonction acide choisi parmi les homopolymères et copolymères de tout mélange de monomères de styrène, dérivé de styrène, méthacrylate et acrylate.

2. Procédé selon la revendication 1, dans lequel l'impression s'effectue par impression par jet d'encre ; dans lequel le chauffage est à une température d'au moins 100 °C ; et/ou dans lequel le chauffage est pendant au moins 15 secondes, de préférence pendant au moins 30 secondes.

3. Composition aqueuse pour jet d'encre thermodurcissable comprenant :
(a) une résine soluble dans l'eau ou dispersible dans l'eau à fonction acide, la résine fonctionnelle acide étant au moins partiellement neutralisée par une base non volatile, la résine soluble dans l'eau ou dispersible dans l'eau à fonction acide étant choisie parmi le styrène et les copolymères de styrène et acrylique qui sont définis comme un polymère à fonction acide choisi parmi les homopolymères et copolymères de tout mélange de monomères de styrène, dérivé de styrène, méthacrylate et acrylate, et dans laquelle la base non volatile est une base inorganique ou une base organique ayant un point d'ébullition supérieur à 100 °C ; et
(b) un matériau à fonction hydroxyle, le matériau à fonction hydroxyle comprenant une dispersion de polyuréthane à fonction hydroxyle ayant un indice d'hydroxyle ≥ 25 mg de KOH/g (sur la base du poids sec du polymère), une silice colloïdale modifiée organiquement à fonction hydroxyle ou une combinaison de celles-ci.

4. Composition selon la revendication 3, dans laquelle la résine soluble dans l'eau ou dispersible dans l'eau à fonction acide a un indice d'acide supérieur à 10 mg de KOH/g (sur la base du poids sec du polymère).

5. Composition selon l'une quelconque des revendications 3 et 4, dans laquelle la composition a une viscosité inférieure à 10,0 mPa.s à 32 °C, telle que mesurée à l'aide d'un viscosimètre Brookfield DV-II+ Pro équipé d'une broche n° 18, 100 tpm ; et/ou dans laquelle la résine soluble dans l'eau ou dispersible dans l'eau à fonction acide est un copolymère styrène-acrylique.

6. Composition selon l'une quelconque des revendications 3 à 5, dans laquelle le matériau à fonction hydroxyle a un indice d'hydroxyle ≥ 25 mg de KOH/g (sur la base du poids sec) ou
dans laquelle le matériau a fonction hydroxyle comprend une dispersion de polyuréthane ayant un indice d'hydroxyle ≥ 25 mg de KOH/g (sur la base du poids sec du polymère).

7. Composition selon l'une quelconque des revendications 3 à 6, dans laquelle le matériau à fonction hydroxyle comprend une silice colloïdale modifiée organiquement à fonction hydroxyle.

8. Composition selon l'une quelconque des revendications 3 à 7, dans laquelle la teneur totale en solides contribuée par la résine à fonction acide et le matériau à fonction hydroxyle est ≤ 20 % (p/p) ; dans laquelle le rapport de la résine à fonction acide sur le matériau à fonction hydroxyle, sur la base du poids sec, est compris entre 10:1 et 1:10 ; et/ou comprenant en outre une concentration de co-solvants organiques solubles dans l'eau de ≤ 35 % (p/p), de préférence ≤ 30 % (p/p).

9. Composition selon la revendication 8, dans laquelle la concentration de solvants organiques solubles dans l'eau ayant des points d'ébullition supérieurs à 250 °C est ≤ 10 % (p/p), de préférence ≤ 5 % (p/p) ; et/ou dans laquelle la concentration de solvants organiques solubles dans l'eau ayant des points d'ébullition supérieurs à 200 °C est ≤ 10 % (p/p), de préférence ≤ 5 % (p/p).

10. Composition selon l'une quelconque des revendications 3 à 9, comprenant en outre une ou plusieurs matière(s) colorante(s), y compris un ou plusieurs pigment(s) et/ou colorant(s), comprenant de préférence un ou plusieurs pigment(s).

11. Procédé selon l'une quelconque des revendications 1 à 2, dans lequel la composition est telle que définie dans l'une quelconque des revendications 3 à 10.

12. Procédé selon l'une quelconque des revendications 1 à 2 ou 11, dans lequel le substrat est un métal ou un textile, de préférence dans lequel le substrat est un textile riche en coton ; et/ou dans lequel le substrat est pré-revêtu avec une couche d'apprêt réceptrice d'impression.

13. Substrat imprimé comprenant la composition selon l'une quelconque ou plusieurs des revendications 3 à 10, dans lequel le substrat est un métal ou un textile, de préférence dans lequel le substrat est un textile riche en coton.

14. Substrat imprimé selon la revendication 13, dans lequel le substrat est pré-revêtu d'une couche d'apprêt réceptrice d'impression.
